# EUROPÄISCHE PATENTSCHRIFT

(11) **EP 4 143 520 B1**
(45) Veröffentlichungstag und Bekanntmachung des Hinweises auf die Patenterteilung: **06.08.2025**
(21) Anmeldenummer: 21734055.3
(22) Anmeldetag: 08.06.2021
(51) Int. Cl.: G01J 3/02

(54) **VERFAHREN ZUR KALIBRIERUNG EINER MEHRZAHL AN BAUGLEICHEN SPEKTROMETERN**
CALIBRATION METHOD FOR A PLURALITY OF STRUCTURALLY IDENTICAL SPECTROMETERS
PROCÉDÉ D'ÉTALONNAGE POUR UNE PLURALITÉ DE SPECTROMÈTRES À STRUCTURE IDENTIQUE

(30) Priorität: 18.06.2020 DE 102020116094
(43) Veröffentlichungstag der Anmeldung: 08.03.2023
(73) Patentinhaber: Carl Zeiss Spectroscopy GmbH, 07745 Jena (DE)
(72) Erfinder: BIER, Clemens Michael, 06295 Lutherstadt Eisleben (DE); BÜTTNER, Torsten, 07745 Jena (DE); BARTH, Michael, 99096 Erfurt (DE); KERSTAN, Felix, 07747 Jena (DE)
(74) Vertreter: Engel, Christoph Klaus
(86) Internationale Anmeldenummer: PCT/EP2021/065264
(87) Internationale Veröffentlichungsnummer: WO 2021/254825

(56) Entgegenhaltungen:
- US-A1- 2015 160 121
- BOUVERESSE E ET AL: "ASSESSING THE VALIDITY OF NEAR-INFRARED MONOCHROMATOR CALIBRATIONS OVER TIME", APPLIED SPECTROSCOPY, THE SOCIETY FOR APPLIED SPECTROSCOPY. BALTIMORE, US, vol. 52, no. 4, 1 April 1998 (1998-04-01), pages 604 - 612, XP000774889, ISSN: 0003-7028, DOI: 10.1366/0003702981943941
- DESPAGNE F ET AL: "TRANSFER OF CALIBRATIONS OF NEAR-INFRARED SPECTRA USING NEURAL NETWORKS", APPLIED SPECTROSCOPY, THE SOCIETY FOR APPLIED SPECTROSCOPY. BALTIMORE, US, vol. 52, no. 5, 1 May 1998 (1998-05-01), pages 732 - 745, XP000776223, ISSN: 0003-7028, DOI: 10.1366/0003702981944157

## Beschreibung

Die vorliegende Erfindung betrifft ein Verfahren zum Kalibrieren einer Mehrzahl an baugleichen Spektrometern zur Inhaltsstoffanalyse. Durch das Kalibrieren soll die Konzentration eines bestimmten Inhaltsstoffes von zu vermessenden Proben mit den einzelnen Spektrometern genau gemessen werden können. Der Vorgang des Kalibrierens umfasst zumindest das Bereitstellen eines Regressionsmodells, welches zu verwenden ist, um die Konzentrationen des Inhaltsstoffes ausgehend von den mit den Spektrometern gemessenen Spektren der Probe zu bestimmen.

Die DE 601 14 036 T2 zeigt ein Verfahren zum Charakterisieren von Spektrometer-Instrumenten gemäß der zwischen den Instrumenten vorliegenden instrumentellen Variation oder gemäß der Variation über die Zeit innerhalb des gleichen Instrumentes. Es wird eine Mehrzahl von Spektren bekannter Standards von mindestens einem Spektrometer-Instrument vorgesehen. Es erfolgt ein Klassifizieren des mindestens einen Spektrometer-Instrumentes in mindestens einen von einer Mehrzahl vordefinierter Cluster auf der Basis von spektralen Merkmalen, welche aus dem mindestens einen Spektrum extrahiert wurden. Mindestens ein Kalibrationsmodell wird für jeden der vordefinierten Cluster vorgesehen. Jedes Kalibrationsmodell kompensiert die instrumentelle Variation von Instrumenten, die in den jeweiligen Cluster klassifiziert wurden.

In dem Artikel von Workman JR, J. J.: "A Review of Calibration Transfer Practices and Instrument Differences in Spectroscopy" in Applied Spectroscopy, Vol. 72(3), 2018, Seiten 340 bis 365, DOI: 10.1177/0003702817736064, wird ein Überblick über Verfahren zur Übertragung von Kalibrierungsmodellen zwischen Spektrometern gegeben.

Die DE 696 08 252 T2 zeigt ein Verfahren zur Standardisierung einer Vielzahl von Spektrometern.

Aus der EP 1 998 155 A1 ist ein Verfahren zur Wellenlängenkalibration eines Spektrometers bekannt, welches auf dem Prinzip einer schrittartigen Relativverschiebung von korrespondierenden Messwertblöcken eines Modell- und Kalibrationsspektrums beruht.

Die DE 101 52 679 A1 lehrt ein Verfahren zur vollautomatischen Übertragung von Kalibrationen optischer Emissionsspektrometer.

In der DE 10 2004 061 178 A1 ist ein Verfahren zur vollautomatischen Übertragung von Kalibrationen zwischen Spektrometern gezeigt. Die Spektrometer umfassen Spektrometeroptiken mit positionierbaren Spalten.

Die DE 692 11 163 T2 zeigt ein Verfahren zum Kalibrieren eines Spektralinstruments zum Bestimmen eines Wertes einer Eigenschaft einer unbekannten Probe durch Verwenden von Konstanten in einer zweiten Kalibriergleichung für das Instrument durch Bezugnahme auf ein Spektralinstrument, das eine erste Kalibriergleichung hat. Aus der ersten Kalibriergleichung wird ein Wert einer abhängigen ersten Variablen entsprechend jedem Glied eines Satzes von

Kalibrierübertragungsstandards basierend auf ersten Spektraldaten für jedes Glied des Satzes von Kalibrierübertragungsstandards bestimmt. Es erfolgt ein Bestimmen von zweiten Konstanten in der zweiten Kalibriergleichung so, dass die Summe der Absolutdifferenzen zwischen jedem genannten Wert der unabhängigen zweiten Variablen für jedes Glied des Satzes von Kalibrierübertragungsstandards unter Verwendung von durch das Instrument gemessenen zweiten Spektraldaten und jenem entsprechenden Wert der abhängigen ersten Variablen, der für jedes Glied des Satzes von Kalibrierübertragungsstandards, die durch die erste Kalibriergleichung bestimmt worden sind, bestimmt worden ist, minimiert wird. Die Werte der genannten Eigenschaft in der unbekannten Probe werden durch Verwendung des Instrumentes bestimmt.

Die Kalibrierung eines Spektrometers zur Inhaltsstoffanalyse ist durch die Anwendung eines Referenzmessverfahrens zum Bestimmen der Konzentration des jeweiligen Inhaltsstoffes aufwändig, da das Referenzmessverfahren zumeist eine chemische Analyse erfordert. Daher ist es wünschenswert, nicht jedes einzelne Exemplar eines massenhaft hergestellten Spektrometertyps hinsichtlich der Inhaltsstoffanalyse kalibrieren zu müssen. Hierfür ist eine exemplarisch durchgeführte Kalibrierung robust gegenüber kleinen Unterschieden in der Herstellung der Spektrometer zu gestalten. Gerade vor dem Hintergrund, dass miniaturisierte Spektrometer vermehrt als Sensoren verbaut werden, wird diese Frage für Hersteller und Kalibrateure immer wichtiger. Bei großen Stückzahlen an Spektrometern als Messsensoren kann nicht jedes einzelne Produkt auf jedem einzelnen Gerät gegenüber dem in einem Labor durchzuführenden Referenzmessverfahren abgeglichen werden. Gemäß dem Stand der Technik wird eine größere Anzahl von Spektrometern für Kalibrationen genutzt, um den Einfluss der einzelnen Geräte zu minimieren. Um ein hohes Inter-Instrument-Agreement (IIA) zu erzielen, ist eine Auswahl an Spektrometern für Kalibrierarbeiten zur Verfügung zu haben, was mit entsprechendem Aufwand verbunden ist. Bei prozesstechnischen Applikationen, wo Proben nach der Spektrumsaufnahme aus dem Prozess gezogen werden, ist dies aber nahezu unmöglich. Zudem ist es nicht möglich, Kalibrierungen im Nachgang im Hinblick auf eine Verbesserung des IIA zu optimieren, da dafür neue Proben und eine Vielzahl an Spektrometern notwendig wären.

In dem Artikel von Despagne, Frédéric et al.: "Transfer of Calibrations of Near-Infrared Spectra Using Neural Networks" in Applied Spectroscopy, The Society for Applied Spectroscopy, Baltimore, USA, Band 52, Nr. 5, 1998, Seiten 732 bis 745 wird ein Ansatz zur multivariaten Standardisierung von Instrumenten auf der Basis von neuronalen Netzwerken beschrieben. Gemäß diesem Ansatz werden spektrale Differenzen zwischen zwei Instrumenten mathematisch modelliert.

Die Aufgabe der vorliegenden Erfindung besteht ausgehend vom Stand der Technik darin, das Inter-Instrument-Agreement (IIA) von Spektrometern zur Inhaltsstoffanalyse aufwandsarm verbessern zu können.

Die genannte Aufgabe wird gelöst durch ein Verfahren gemäß dem beigefügten Anspruch 1.

Das erfindungsgemäße Verfahren dient zum Kalibrieren einer Mehrzahl an baugleichen Spektrometern. Die baugleichen Spektrometer dienen zur Inhaltsstoffanalyse. Das Kalibrieren erfolgt hinsichtlich der Inhaltsstoffanalyse, d. h. der Bestimmung der Konzentration eines Inhaltsstoffes einer Probe ausgehend von einem an der Probe gemessenen Spektrum. Die Spektrometer sind baugleich zumindest hinsichtlich der Messsignalaufnahme und Messsignalverarbeitung, wobei die Spektrometer hinsichtlich solcher Eigenschaften, welche die Messsignalaufnahme und Messsignalverarbeitung nicht beeinflussen, wie beispielsweise die Gestaltung eines Gehäuses oder eines Steckverbinders unterschiedlich sein können. Die baugleichen Spektrometer sind bevorzugt vom selben Typ.

Bei den Spektrometern handelt es sich beispielsweise um NIR-Spektrometer, VIS/NIR-Spektrometer oder Full-Range Spektrometer. Die Spektrometer können einen Transmissions-, einen Transflexions- oder einen Reflexionsaufbau aufweisen. Bei den Spektrometern kann es sich beispielsweise um monochromatorbasierte Spektrometer, interferometerbasierte Spektrometer, filterbasierte Spektrometer oder MEMS-Spektrometer handeln.

Der Vorgang des Kalibrierens umfasst zumindest das Bereitstellen eines Regressionsmodells, welches zu verwenden ist, um die Konzentrationen des Inhaltsstoffes ausgehend von den mit den Spektrometern gemessenen Spektren der Probe zu bestimmen. Insoweit dient das Verfahren zumindest zum Bereitstellen eines Regressionsmodells zum Kalibrieren einer Mehrzahl an baugleichen Spektrometern zur Inhaltsstoffanalyse.

In einem Schritt des Verfahrens wird eine Vielzahl an Proben bereitgestellt. Die Proben enthalten einen Inhaltsstoff in unterschiedlichen Konzentrationen. Dabei handelt es sich um denjenigen Inhaltsstoff, für dessen Messung die Spektrometer kalibriert werden sollen. Bevorzugt werden mindestens zehn der Proben und weiter bevorzugt mindestens 100 der Proben bereitgestellt. Bevorzugt werden zwischen 50 und 500 der Proben bereitgestellt. Die Proben wurden einem Material oder einem Produkt entnommen, welches durch die Spektrometer hinsichtlich seines Inhaltes untersucht werden soll. Bei dem Material bzw. dem Produkt handelt es sich bevorzugt um ein landwirtschaftliches Produkt, um ein Lebensmittel oder um ein Nahrungsmittel. Bei dem landwirtschaftlichen Produkt handelt es sich bevorzugt um ein Erntegut. Die Spektrometer sind bevorzugt dazu ausgebildet, auf einem landwirtschaftlichen Fahrzeug, in einer landwirtschaftlichen Maschine oder in einem Prozess der Lebensmittelherstellung die Konzentration des mindestens einen Inhaltsstoffes des landwirtschaftlichen Produktes bzw. des Lebensmittels zu messen. Der Inhaltsstoff ist bevorzugt durch Wasser, durch ein Protein, durch ein Öl, durch Zucker, durch Stärke oder durch eine Rohfaser gebildet. Die Messung der Konzentration von Wasser stellt eine Feuchtigkeitsmessung dar.

In einem weiteren Schritt des Verfahrens werden die Konzentrationen des Inhaltsstoffes in den einzelnen Proben mit einem Referenzmessverfahren gemessen, sodass Referenzmesswerte für die Konzentrationen des Inhaltsstoffes erhalten werden. Das Referenzmessverfahren führt zu genauen Messwerten der Konzentrationen des Inhaltsstoffes in den einzelnen Proben. Das Referenzmessverfahren ist bevorzugt durch ein chemisches Analyseverfahren gebildet. Das chemische Analyseverfahren ist bevorzugt ein nasschemisches Analyseverfahren.

In einem weiteren Schritt des Verfahrens werden Spektren der einzelnen Proben mit einem aus den baugleichen Spektrometern exemplarisch ausgewählten Spektrometer gemessen. Bei den Spektren handelt es sich bevorzugt um Absorptions-, Transmission- und/oder Reflexionsspektren. Die Spektren werden bei den Proben jeweils nach dem gleichen Messprinzip gemessen.

Die Spektren werden bevorzugt im infraroten Bereich, im sichtbaren Bereich und/oder im ultravioletten Bereich des elektromagnetischen Spektrums gemessen. Die Spektren werden bevorzugt im nahen infraroten Bereich des elektromagnetischen Spektrums gemessen. Die Spektren werden über einen Wellenlängenbereich gemessen, welcher bevorzugt mindestens 100 nm und weiter bevorzugt mindestens 300 nm groß ist. Die Spektren werden bevorzugt dadurch gemessen, dass Amplituden bei ausgewählten Wellenlängen gemessen werden. Bevorzugt werden die Amplituden bei mindestens 10 ausgewählten Wellenlängen gemessen. Weiter bevorzugt werden die Amplituden bei mindestens 100 ausgewählten Wellenlängen gemessen. Weiter bevorzugt werden die Amplituden bei mindestens 300 ausgewählten Wellenlängen gemessen.

Das exemplarisch ausgewählte Spektrometer ist baugleich mit den übrigen baugleichen Spektrometern. Das exemplarisch ausgewählte Spektrometer weist bevorzugt einen mittleren Fehler auf.

In einem weiteren Schritt des Verfahrens wird ein vorläufiges Regressionsmodell bestimmt, bei welchem die Amplitudenwerte der gemessenen Spektren die unabhängigen Variablen bilden und bei welchem die Referenzmesswerte der Konzentrationen des Inhaltsstoffes die abhängige Variable bilden. Im Ergebnis steht eine mathematische Funktion zur Verfügung, welche die Abhängigkeit der Konzentration des Inhaltsstoffes von den Amplitudenwerten des Spektrums beschreibt. Das vorläufige Regressionsmodell weist bevorzugt mindestens eine weitere abhängige Variable auf, welche eine physikalische oder chemische Eigenschaft der Proben beschreibt.

In einem weiteren Schritt des Verfahrens wird mindestens ein Spektrum aus einer Menge von Spektren ausgewählt, wobei diese Menge die gemessenen Spektren und ein aus den gemessenen Spektren gebildetes Mittelwertspektrum umfasst. Das Auswählen erfolgt entsprechend einer Eignung zur Vorhersage der Konzentration des Inhaltsstoffes insbesondere in der jeweiligen Probe. Bevorzugt werden ein bis zehn Spektren aus den gemessenen Spektren und/oder dem aus den gemessenen Spektren gebildeten Mittelwertspektrum ausgewählt.

Der Schritt des Auswählens mindestens eines Spektrums aus den gemessenen Spektren und/oder einem aus den gemessenen Spektren gebildeten Mittelwertspektrum umfasst bevorzugt einen oder beide der im Folgenden beschriebenen zwei Teilschritte. Gemäß einem Teilschritt erfolgt ein Anwenden des vorläufigen Regressionsmodells auf die gemessenen Spektren, um jeweils einen Vorhersagewert für die Konzentration des Inhaltsstoffes in der jeweiligen Probe zu erhalten, wobei dasjenige gemessene Spektrum oder diejenigen gemessenen Spektren ausgewählt werden, für welche der Vorhersagewert dem Referenzmesswert der jeweiligen Probe am nächsten kommt. Es werden somit diejenigen gemessenen Spektren ausgewählt, welche möglichst nah an der Regressionslinie des vorläufigen Regressionsmodells liegen. Gemäß einem anderen Teilschritt wird das Mittelwertspektrum ausgewählt. Das Mittelwertspektrum wird bevorzugt dadurch aus den gemessenen Spektren gebildet, dass die Amplitudenwerte der gemessenen Spektren jeweils bei jeder der ausgewählten Wellenlängen gemittelt werden, beispielsweise durch arithmetische Mittelung. Dem Mittelwertspektrum wird ein Referenzmesswert für die Konzentration des Inhaltsstoffes zugeordnet, welcher durch Anwendung des vorläufigen Regressionsmodels auf das Mittelwertspektrum bestimmt wurde.

In einem weiteren Schritt des Verfahrens erfolgt ein vielfaches Simulieren von Toleranzen von Komponenten der baugleichen Spektrometer mit einem mathematischen Modell der baugleichen Spektrometer, um eine Vielzahl an Fehlerspektren zu erhalten. Das mathematische Modell der baugleichen Spektrometer beschreibt die Komponenten der baugleichen Spektrometer; insbesondere die optischen und elektronischen Komponenten. Das mathematische Modell beschreibt insbesondere Fehlereigenschaften, nämlich die auftretenden Toleranzen der Komponenten, sodass das mathematische Modell geeignet ist, einen maximalen Fehler für die Richtigkeit jeder Wellenlänge und der zugehörigen Amplitude der Transmission, Reflexion und/oder Absorption zu berechnen. Basierend auf diesen Maximalfehlern der einzelnen ausgewählten Wellenlängen werden die möglichen Fehlerspektren zum idealen Spektrometer simuliert. Die Fehlerspektren stellen Differenzspektren dar. Bevorzugt erfolgen mindestens 100 Simulationen, sodass mindestens 100 Fehlerspektren erhalten werden. Weiter bevorzugt erfolgen mindestens 500 Simulationen, sodass mindestens 500 Fehlerspektren erhalten werden.

In einem weiteren Schritt des Verfahrens werden die einzelnen Fehlerspektren jeweils zu dem ausgewählten Spektrum bzw. zu den einzelnen ausgewählten Spektren addiert, um simulierte Spektren zu erhalten. Es handelt sich bei den simulierten Spektren um Spektren, wie sie tatsächlich mit den baugleichen Spektrometern gemessen werden könnten, da sie zum einen auf tatsächlich mit den baugleichen Spektrometern gemessenen Spektren beruhen und zum anderen einen Fehleranteil aufweisen, welcher mit dem mathematischen Modell der baugleichen Spektrometer durch Simulation ermittelt wurde. Die Addition der einzelnen Fehlerspektren jeweils zu dem ausgewählten Spektrum bzw. zu den einzelnen ausgewählten Spektren erfolgt bevorzugt jeweils für die Amplitudenwerte der ausgewählten Wellenlängen. Wenn die Anzahl der Fehlerspektren beispielsweise 1.000 beträgt und wenn die Anzahl der ausgewählten Spektren beispielsweise eins beträgt, so beträgt die Anzahl der erhaltenen simulierten Spektren 1 · 1.000 = 1.000. Wenn die Anzahl der Fehlerspektren beispielsweise 1.000 beträgt und wenn die Anzahl der ausgewählten Spektren fünf beträgt, so beträgt die Anzahl der erhaltenen simulierten Spektren 5 · 1.000 = 5.000.

In einem weiteren Schritt des Verfahrens erfolgt ein Anwenden des vorläufigen Regressionsmodells auf die simulierten Spektren, um jeweils einen Vorhersagewert für die Konzentration des Inhaltsstoffes zu erhalten. Im Ergebnis liegt für jedes der simulierten Spektren ein Vorhersagewert für die Konzentration des Inhaltsstoffes vor. Den simulierten Spektren ist jeweils derjenige Referenzmesswert der Konzentration des Inhaltsstoffes zugeordnet, welcher für das dem jeweiligen simulierten Spektrum zugrunde liegende ausgewählte Spektrum ermittelt wurde.

In einem weiteren Schritt des Verfahrens wird eine Anzahl der simulierten Spektren ausgewählt, wobei die für die ausgewählten simulierten Spektren erhaltenen Vorhersagewerte eine Streuung der für die simulierten Spektren erhaltenen Vorhersagewerte abbilden. Es werden somit diejenigen der simulierten Spektren ausgewählt, welche geeignet sind, zur Verbesserung des vorläufigen Regressionsmodells beizutragen. Bevorzugt beträgt die Anzahl der ausgewählten simulierten Spektren zwischen 50 und 1.000.

In einem weiteren Schritt des Verfahrens wird ein resultierendes Regressionsmodell bestimmt, bei welchem Amplitudenwerte der gemessenen Spektren und der ausgewählten simulierten Spektren die unabhängigen Variablen bilden und bei welchem die Referenzmesswerte der Konzentrationen des Inhaltsstoffes die abhängige Variable bilden. Die Bestimmung des resultierenden Regressionsmodells unterscheidet sich von der Bestimmung des vorläufigen Regressionsmodells nur dadurch, dass zusätzlich die Amplitudenwerte der ausgewählten simulierten Spektren berücksichtigt werden. Das resultierende Regressionsmodell ist also eine Verbesserung des vorläufigen Regressionsmodells, sodass das resultierende Regressionsmodell eine gegen Fehler robustere Kalibrierung darstellt; insbesondere gegen Unterschiede durch Fertigungstoleranzen der baugleichen Spektrometer.

Die unabhängigen Variablen des vorläufigen Regressionsmodells und die unabhängigen Variablen des resultierenden Regressionsmodells sind bevorzugt jeweils die Amplitudenwerte der gemessenen bzw. ausgewählten simulierten Spektren bei ausgewählten Wellenlängen. Die unabhängigen Variablen des vorläufigen Regressionsmodells und die unabhängigen Variablen des resultierenden Regressionsmodells sind bevorzugt jeweils die Amplitudenwerte gemessenen bzw. ausgewählten simulierten der gleichen ausgewählten Wellenlängen. Das vorläufige Regressionsmodell und das resultierende Regressionsmodell sind bevorzugt jeweils durch ein multilineares Regressionsmodell gebildet. Das Bestimmen des vorläufigen Regressionsmodells und das Bestimmen des resultierenden Regressionsmodells erfolgt bevorzugt jeweils durch eine Partial-Least-Squares-Regression.

Bevorzugt beträgt die Anzahl der ausgewählten simulierten Spektren höchstens 50 % der Anzahl der gemessenen Spektren. Beispielsweise beträgt die Anzahl der ausgewählten simulierten Spektren etwa 75, während die Anzahl der gemessenen Spektren etwa 150 beträgt. Hierdurch wird stark erhöhte Robustheit des resultierenden Regressionsmodells im Vergleich zum vorläufigen Regressionsmodell erreicht.

Ein besonderer Vorteil des beschriebenen Verfahrens besteht darin, dass durch eine vergleichsweise aufwandsarme Simulation die Kalibrierung der baugleichen Spektrometer zur Inhaltsstoffanalyse verbessert werden kann. Es bedarf keiner Messungen mit den einzelnen baugleichen Spektrometern, um diese einzeln zur Inhaltsstoffanalyse zu kalibrieren. Durch die Verwendung des mathematischen Modells werden die Fehlereigenschaften der baugleichen Spektrometer berücksichtigt. Die Streubreite der baugleichen Spektrometer wird bei Verwendung desselben Modells ohne weitere Anpassungen abhängig von Produkt und Inhaltsstoff um bis zu 30% reduziert.

Bei bevorzugten Ausführungsformen ist das Verfahren weiterhin zur Nutzung der Kalibrierung bzw. des resultierenden Regressionsmodells ausgebildet. Hierfür umfasst es einen weiteren Schritt, bei welchem das resultierende Regressionsmodell in den einzelnen baugleichen Spektrometern verwendet wird, um mit den Spektrometern jeweils die Konzentration des Inhaltsstoffes einer Probe ausgehend von dem mit dem jeweiligen Spektrometer gemessenen Spektrum der Probe zu bestimmen. Hierfür ist das resultierende Regressionsmodell in Form von Software, welche das resultierende Regressionsmodell als mathematischen Zusammenhang zwischen der Konzentration des Inhaltsstoffes und dem gemessenen Spektrum beschreibt, in die einzelnen Spektrometer zu laden. Alternativ bevorzugt wird das resultierende Regressionsmodell in einem Netzwerk verwendet. Das Netzwerk umfasst die einzelnen baugleichen Spektrometer und mindestens eine Recheneinheit. Das Netzwerk stellt ein Datennetzwerk dar. Die Spektrometer und die mindestens eine Recheneinheit sind über Datenverbindungen miteinander verbunden. Die mindestens eine Recheneinheit ist bevorzugt durch einen Rechner, insbesondere durch einen Server gebildet. Bevorzugt umfasst das Netzwerk mehrere der Rechner. Die mindestens eine Recheneinheit wird genutzt, die Konzentrationen des Inhaltsstoffes der Proben ausgehend von den mit den Spektrometern gemessenen Spektren der Proben zu bestimmen. Somit erfolgt die Bestimmung der Konzentrationen bevorzugt durch Cloud Computing. Hierfür ist das resultierende Regressionsmodell in Form von Software, welche das resultierende Regressionsmodell als mathematischen Zusammenhang zwischen der Konzentration des Inhaltsstoffes und dem gemessenen Spektrum beschreibt, auf die mindestens eine Recheneinheit zu übertragen.

Außerhalb des Schutzumfangs der Ansprüche wird im Weiteren eine Mehrzahl an baugleichen Spektrometern zur Inhaltsstoffanalyse offenbart. Die einzelnen Spektrometer sind jeweils zur Bestimmung einer Konzentration eines Inhaltsstoffes einer Probe ausgehend von einem mit dem jeweiligen Spektrometer gemessenen Spektrum konfiguriert. Die einzelnen Spektrometer sind dem oben beschriebenen Verfahren dadurch kalibriert, dass ein Zusammenhang zwischen einem zu bestimmenden Messwert für die Konzentration des Inhaltsstoffes und dem gemessenen Spektrum durch das resultierende Regressionsmodell definiert ist. Bevorzugt wurde das resultierende Regressionsmodell mit einer der oben beschriebenen bevorzugten Ausführungsformen des Verfahrens bestimmt.

Die Mehrzahl an baugleichen Spektrometern umfasst bevorzugt mindestens 100 der baugleichen Spektrometer und weiter bevorzugt mindestens 1.000 der baugleichen Spektrometer.

Die Spektrometer weisen bevorzugt auch Merkmale auf, die im Zusammenhang mit dem Verfahren oben beschrieben sind.

Weitere Einzelheiten und Weiterbildungen der Erfindung ergeben sich aus der nachfolgenden Beschreibung bevorzugter Ausführungsformen der Erfindung, unter Bezugnahme auf die Zeichnung. Es zeigen:
- Fig. 1:: ein Diagramm zur Darstellung von Fehlerspektren, welche gemäß einer bevorzugten Ausführungsform eines erfindungsgemäßen Verfahrens erzeugt wurden; und
- Fig. 2:: ein Diagramm zur Darstellung von Vorhersagewerten, welche gemäß dem Stand der Technik und gemäß einer bevorzugten Ausführungsform des erfindungsgemäßen Verfahrens bestimmt wurden.

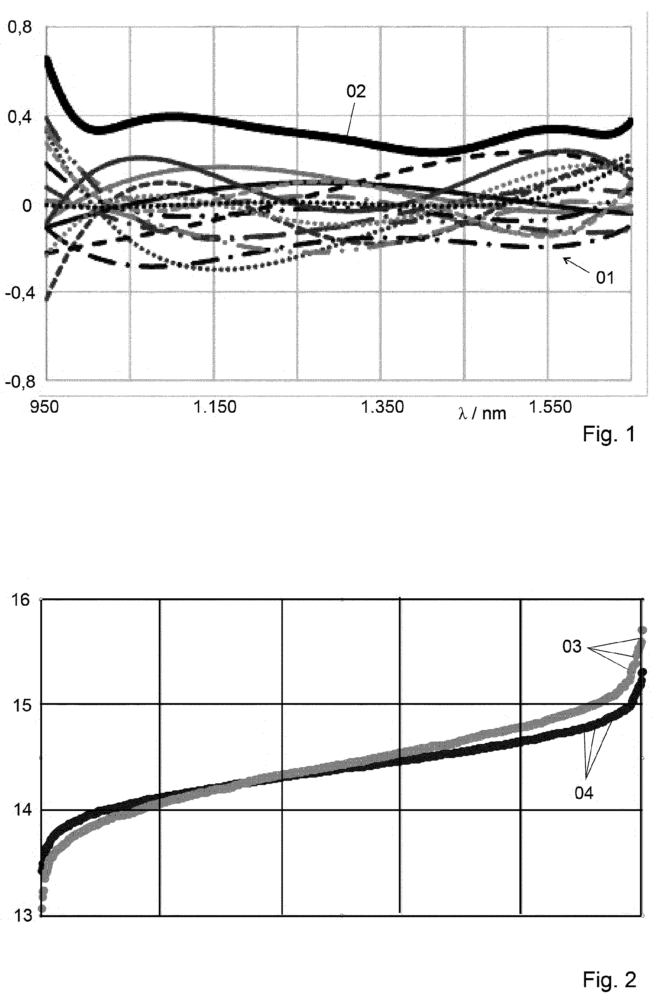

Fig. 1 zeigt ein Diagramm zur Darstellung von Fehlerspektren 01, welche gemäß einer bevorzugten Ausführungsform eines erfindungsgemäßen Verfahrens erzeugt wurden. Die Fehlerspektren 01 wurden jeweils dadurch erzeugt, dass Toleranzen von Komponenten von baugleichen zu kalibrierenden Spektrometern zur Inhaltsstoffanalyse mit einem mathematischen Modell simuliert wurde, wobei das mathematische Modell eines der vielen baugleichen Spektrometer abbildet. Die x-Achse des Diagramms stellt die Wellenlänge λ dar. Auf der y-Achse des Diagramms ist die Abweichung, d. h. der Fehler aufgetragen, welcher sich bei der jeweiligen Anwendung des mathematischen Modells im Vergleich zu einem vorgegebenen Wert der Wellenlänge ergibt. Ein ideales Spektrometer hätte einen Fehler von Null. In dem Diagramm ist weiterhin eine sich mit dem mathematischen Modell ergebende 3a-Abweichung 02 dargestellt. Die Fehlerspektren 01 werden genutzt, um ein Regressionsmodell zur Kalibrierung der vielen baugleichen zu kalibrierenden Spektrometer zur Inhaltsstoffanalyse robuster gegen Fehler der Spektrometer entwickeln zu können.

Fig. 2 zeigt ein Diagramm zur Darstellung von Vorhersagewerten 03, welche gemäß dem Stand der Technik bestimmt wurden, und von Vorhersagewerten 04, welche gemäß einer bevorzugten Ausführungsform des erfindungsgemäßen Verfahrens bestimmt wurden. Auf der x-Achse ist die Vielzahl der Spektrometer aufgetragen. Auf der y-Achse ist die Größe des Vorhersagewertes der Konzentration eines Inhaltsstoffes aufgetragen, welche mit dem jeweiligen Spektrometer gemessen wurde. Die Vorhersagewerte 03, 04 sind jeweils nach der Größe ihrer Abweichung sortiert. Die Vorhersagewerte 04, welche gemäß der bevorzugten Ausführungsform des erfindungsgemäßen Verfahrens bestimmt wurden, verdeutlichen, dass das Inter-Instrument-Agreement (IIA) im Vergleich zum Stand der Technik deutlich verbessert wurde.

### Bezugszeichenliste

- 01: Fehlerspektren
- 02: 3σ-Abweichung
- 03: Vorhersagewerte gemäß dem Stand der Technik
- 04: Vorhersagewerte gemäß der Erfindung

## Patentansprüche

1. Verfahren zum Bereitstellen eines Regressionsmodells zum Kalibrieren einer Mehrzahl an baugleichen Spektrometern zur Inhaltsstoffanalyse; folgende Schritte umfassend:
- Bereitstellen einer Vielzahl an Proben, welche einen Inhaltsstoff in unterschiedlichen Konzentrationen enthalten;
- Messen der Konzentrationen des Inhaltsstoffes in den einzelnen Proben mit einem Referenzmessverfahren, um Referenzmesswerte für die Konzentrationen des Inhaltsstoffes zu erhalten;
- Messen von Spektren der einzelnen Proben mit einem aus den baugleichen Spektrometern exemplarisch ausgewählten Spektrometer;
- Bestimmen eines vorläufigen Regressionsmodells, bei welchem Amplitudenwerte der gemessenen Spektren die unabhängigen Variablen bilden und bei welchem die Referenzmesswerte der Konzentrationen des Inhaltsstoffes die abhängige Variable bilden;
- Auswählen mindestens eines Spektrums aus den gemessenen Spektren und/oder einem aus den gemessenen Spektren gebildeten Mittelwertspektrum entsprechend einer Eignung zur Vorhersage der Konzentration des Inhaltsstoffes;
- vielfaches Simulieren von Toleranzen von Komponenten der baugleichen Spektrometer mit einem mathematischen Modell der baugleichen Spektrometer, um eine Vielzahl an Fehlerspektren (01) zu erhalten;
- Addieren der einzelnen Fehlerspektren (01) jeweils zu dem ausgewählten Spektrum oder zu den einzelnen ausgewählten Spektren, um simulierte Spektren zu erhalten;
- Anwenden des vorläufigen Regressionsmodells auf die simulierten Spektren, um jeweils einen Vorhersagewert für die Konzentration des Inhaltstoffes zu erhalten;
- Auswählen einer Anzahl der simulierten Spektren, wobei die für die ausgewählten simulierten Spektren erhaltenen Vorhersagewerte eine Streuung der für die simulierten Spektren erhaltenen Vorhersagewerte abbilden; und
- Bestimmen eines resultierenden Regressionsmodells, bei welchem Amplitudenwerte der gemessenen Spektren und der ausgewählten simulierten Spektren die unabhängigen Variablen bilden und bei welchem die Referenzmesswerte der Konzentrationen des Inhaltsstoffes die abhängige Variable bilden.

2. Verfahren nach Anspruch 1, **dadurch gekennzeichnet, dass** das Referenzmessverfahren durch ein chemisches Analyseverfahren gebildet ist.

3. Verfahren nach Anspruch 1 oder 2, **dadurch gekennzeichnet, dass** der Inhaltsstoff durch Wasser, durch ein Protein, durch ein Öl, durch Zucker, durch Stärke oder durch eine Rohfaser gebildet ist.

4. Verfahren nach einem der Ansprüche 1 bis 3, **dadurch gekennzeichnet, dass** die Spektren im infraroten Bereich, im sichtbaren Bereich und/oder im ultravioletten Bereich des elektromagnetischen Spektrums gemessen werden.

5. Verfahren nach einem der Ansprüche 1 bis 4, **dadurch gekennzeichnet, dass** die Spektren der einzelnen Proben mit dem aus den baugleichen Spektrometern exemplarisch ausgewählten Spektrometer über einen Wellenlängenbereich gemessen werden, welcher mindestens 300 nm groß ist, wobei die Spektren dadurch gemessen werden, dass Amplituden bei mindestens 10 ausgewählten Wellenlängen gemessen werden.

6. Verfahren nach Anspruch 5, **dadurch gekennzeichnet, dass** die unabhängigen Variablen des vorläufigen Regressionsmodells jeweils durch die Amplitudenwerte der gemessenen Spektren bei den ausgewählten Wellenlängen gebildet sind, und dass die unabhängigen Variablen des resultierenden Regressionsmodells jeweils durch die Amplitudenwerte der ausgewählten simulierten Spektren bei den ausgewählten Wellenlängen gebildet sind.

7. Verfahren nach einem der Ansprüche 1 bis 6, **dadurch gekennzeichnet, dass** die unabhängigen Variablen des vorläufigen Regressionsmodells und die unabhängigen Variablen des resultierenden Regressionsmodells durch Amplitudenwerte der Spektren bei ausgewählten Wellenlängen gebildet sind.

8. Verfahren nach einem der Ansprüche 1 bis 7, **dadurch gekennzeichnet, dass** das vorläufige Regressionsmodell und das resultierende Regressionsmodell jeweils durch ein multilineares Regressionsmodell gebildet sind.

9. Verfahren nach einem der Ansprüche 1 bis 8, **dadurch gekennzeichnet, dass** der Schritt des Auswählens mindestens eines Spektrums aus den gemessenen Spektren und/oder einem aus den gemessenen Spektren gebildeten Mittelwertspektrum einen oder beide der folgenden zwei Teilschritte umfasst:
- Anwenden des vorläufigen Regressionsmodells auf die gemessenen Spektren, um jeweils einen Vorhersagewert für die Konzentration des Inhaltsstoffes in der jeweiligen Probe zu erhalten, wobei dasjenige gemessene Spektrum oder diejenigen gemessenen Spektren ausgewählt werden, für welche der Vorhersagewert dem Referenzmesswert der jeweiligen Probe am nächsten kommt;
- Auswählen des Mittelwertspektrums.

10. Verfahren nach einem der Ansprüche 1 bis 9, **dadurch gekennzeichnet, dass** ein bis zehn Spektren aus den gemessenen Spektren und/oder dem aus den gemessenen Spektren gebildeten Mittelwertspektrum ausgewählt werden.

11. Verfahren nach einem der Ansprüche 1 bis 10, **dadurch gekennzeichnet, dass** mindestens 100 Simulationen zum Simulieren von Toleranzen von Komponenten der baugleichen Spektrometer mit dem mathematischen Modell der baugleichen Spektrometer erfolgen, sodass mindestens 100 der Fehlerspektren (01) erhalten werden.

12. Verfahren nach einem der Ansprüche 1 bis 11, **dadurch gekennzeichnet, dass** die Anzahl der ausgewählten simulierten Spektren zwischen 50 und 1.000 beträgt.

13. Verfahren nach einem der Ansprüche 1 bis 12, **dadurch gekennzeichnet, dass** es folgenden weiteren Schritt umfasst:
- Verwenden des resultierenden Regressionsmodells in den einzelnen baugleichen Spektrometern, um mit den Spektrometern jeweils die Konzentration des Inhaltsstoffes einer Probe ausgehend von dem mit dem jeweiligen Spektrometer gemessenen Spektrum der Probe zu bestimmen.

14. Verfahren nach einem der Ansprüche 1 bis 12, **dadurch gekennzeichnet, dass** es folgenden weiteren Schritt umfasst:
- Verwenden des resultierenden Regressionsmodells in einem Netzwerk, welches die einzelnen baugleichen Spektrometer und mindestens eine Recheneinheit umfasst, wobei die mindestens eine Recheneinheit dazu genutzt wird, die Konzentrationen des Inhaltsstoffes der Proben ausgehend von den mit den Spektrometern gemessenen Spektren der Proben zu bestimmen.

## Claims

1. A method for providing a regression model for calibrating a plurality of structurally identical spectrometers for ingredient analysis; comprising the following steps:
- providing a multiplicity of samples which contain an ingredient in different concentrations;
- measuring the concentrations of the ingredient in the individual samples using a reference measurement method to obtain reference measurement values for the concentrations of the ingredient;
- measuring spectra of the individual samples with a spectrometer selected by way of example from the structurally identical spectrometers;
- determining a preliminary regression model in which amplitude values of the measured spectra form the independent variables and in which the reference measurement values of the concentrations of the ingredient form the dependent variable;
- selecting at least one spectrum from the measured spectra and/or an average spectrum formed from the measured spectra according to a suitability for predicting the concentration of the ingredient;
- simulating tolerances of components of structurally identical spectrometers multiple times with a mathematical model of structurally identical spectrometers to obtain a multiplicity of error spectra (01);
- adding the individual error spectra (01) respectively to the selected spectrum or to the individual selected spectra to obtain simulated spectra;
- applying the preliminary regression model to the simulated spectra to obtain in each case a prediction value for the concentration of the ingredient;
- selecting a number of the simulated spectra, wherein the prediction values obtained for the selected simulated spectra depict a variation of the prediction values obtained for the simulated spectra; and
- determining a resulting regression model in which amplitude values of the measured spectra and the selected simulated spectra form the independent variables and in which the reference measurement values of the concentrations of the ingredient form the dependent variable.

2. The method as claimed in claim 1, **characterized in that** the reference measurement method is a chemical analysis method.

3. The method as claimed in claim 1 or 2, **characterized in that** the ingredient is water, a protein, an oil, sugar, starch, or a crude fibre.

4. The method as claimed in any of claims 1 to 3, **characterized in that** the spectra are measured in the infrared range, in the visible range, and/or in the ultraviolet range of the electromagnetic spectrum.

5. The method as claimed in any of claims 1 to 4, **characterized in that** the spectra of the individual samples are measured with the spectrometer selected by way of example from the structurally identical spectrometers over a wavelength range which is at least 300 nm in size, wherein the spectra are measured by measuring amplitudes at at least 10 selected wavelengths.

6. The method as claimed in claim 5, **characterized in that** the independent variables of the preliminary regression model are each formed by the amplitude values of the measured spectra at the selected wavelengths, and **in that** the independent variables of the resulting regression model are each formed by the amplitude values of the selected simulated spectra at the selected wavelengths.

7. The method as claimed in any of claims 1 to 6, **characterized in that** the independent variables of the preliminary regression model and the independent variables of the resulting regression model are formed by amplitude values of the spectra at selected wavelengths.

8. The method as claimed in any of claims 1 to 7, **characterized in that** the preliminary regression model and the resulting regression model are each formed by a multilinear regression model.

9. The method as claimed in any of claims 1 to 8, **characterized in that** the step of selecting at least one spectrum from the measured spectra and/or an average spectrum formed from the measured spectra comprises one or both of the following two sub-steps:
- applying the preliminary regression model to the measured spectra in order to obtain in each case a prediction value for the concentration of the ingredient in the respective sample, wherein that measured spectrum or those measured spectra for which the prediction value comes closest to the reference measurement value of the respective sample is/are selected;
- selecting the average spectrum.

10. The method as claimed in any of claims 1 to 9, **characterized in that** one to ten spectra are selected from the measured spectra and/or the average spectrum formed from the measured spectra.

11. The method as claimed in any of claims 1 to 10, **characterized in that** at least 100 simulations for simulating tolerances of components of the structurally identical spectrometers are carried out using the mathematical model of the structurally identical spectrometers, with the result that at least 100 of the error spectra (01) are obtained.

12. The method as claimed in any of claims 1 to 11, **characterized in that** the number of the simulated spectra selected is between 50 and 1,000.

13. The method as claimed in any of claims 1 to 12, **characterized in that** it comprises the following further step:
- using the resulting regression model in the individual structurally identical spectrometers in order to determine the concentration of the ingredient of a sample with the spectrometers based on the spectrum of the sample measured with the respective spectrometer.

14. The method as claimed in any of claims 1 to 12, **characterized in that** it comprises the following further step:
- using the resulting regression model in a network which comprises the individual structurally identical spectrometers and at least one computing unit, wherein the at least one computing unit is used to determine the concentrations of the ingredient of the samples based on the spectra of the samples measured with the spectrometers.

## Revendications

1. Procédé de fourniture d'un modèle de régression pour l'étalonnage d'une pluralité de spectromètres à structure identique pour une analyse de constituants ; comprenant les étapes consistant à :
- fournir une pluralité d'échantillons contenant un constituant en différentes concentrations ;
- mesurer les concentrations du constituant dans les échantillons individuels à l'aide d'un procédé de mesure de référence, afin d'obtenir des valeurs de mesure de référence pour les concentrations du constituant ;
- mesurer des spectres des échantillons individuels à l'aide d'un spectromètre sélectionné à titre d'exemple parmi les spectromètres à structure identique ;
- déterminer un modèle de régression préliminaire, dans lequel des valeurs d'amplitude des spectres mesurés forment les variables indépendantes et dans lequel les valeurs de mesure de référence des concentrations du constituant forment la variable dépendante ;
- sélectionner au moins un spectre parmi les spectres mesurés et/ou un spectre de valeurs moyennes formé à partir des spectres mesurés, en fonction de son aptitude à prévoir la concentration du constituant ;
- simuler de multiples tolérances de composants des spectromètres à structure identique à l'aide d'un modèle mathématique des spectromètres à structure identique, afin d'obtenir une pluralité de spectres d'erreur (01) ;
- additionner respectivement les spectres d'erreur (01) individuels au spectre sélectionné ou aux spectres individuels sélectionnés, afin d'obtenir des spectres simulés ;
- appliquer le modèle de régression préliminaire aux spectres simulés, afin d'obtenir respectivement une valeur de prévision pour la concentration du constituant ;
- sélectionner un nombre de spectres simulés, les valeurs de prévision obtenues pour les spectres simulés sélectionnés représentant une dispersion des valeurs de prévision obtenues pour les spectres simulés ; et
- déterminer un modèle de régression résultant, dans lequel des valeurs d'amplitude des spectres mesurés et des spectres simulés sélectionnés forment les variables indépendantes et dans lequel les valeurs de mesure de référence des concentrations du constituant forment la variable dépendante.

2. Procédé selon la revendication 1, **caractérisé en ce que** le procédé de mesure de référence est formé par un procédé d'analyse chimique.

3. Procédé selon la revendication 1 ou 2, **caractérisé en ce que** le constituant est constitué d'eau, d'une protéine, d'une huile, de sucre, d'amidon ou d'une fibre brute.

4. Procédé selon l'une quelconque des revendications 1 à 3, **caractérisé en ce que** les spectres sont mesurés dans le domaine infrarouge, dans le domaine visible et/ou dans le domaine ultraviolet du spectre électromagnétique.

5. Procédé selon l'une quelconque des revendications 1 à 4, **caractérisé en ce que** les spectres des échantillons individuels sont mesurés à l'aide du spectromètre sélectionné à titre d'exemple parmi les spectromètres à structure identique dans une gamme de longueurs d'onde d'au moins 300 nm, les spectres étant mesurés en mesurant les amplitudes à au moins 10 longueurs d'onde sélectionnées.

6. Procédé selon la revendication 5, **caractérisé en ce que** les variables indépendantes du modèle de régression préliminaire sont respectivement formées par les valeurs d'amplitude des spectres mesurés aux longueurs d'onde sélectionnées, et **en ce que** les variables indépendantes du modèle de régression résultant sont respectivement formées par les valeurs d'amplitude des spectres simulés sélectionnés aux longueurs d'onde sélectionnées.

7. Procédé selon l'une quelconque des revendications 1 à 6, **caractérisé en ce que** les variables indépendantes du modèle de régression préliminaire et les variables indépendantes du modèle de régression résultant sont formées par des valeurs d'amplitude des spectres à des longueurs d'onde sélectionnées.

8. Procédé selon l'une quelconque des revendications 1 à 7, **caractérisé en ce que** le modèle de régression préliminaire et le modèle de régression résultant sont respectivement formés par un modèle de régression multilinéaire.

9. Procédé selon l'une quelconque des revendications 1 à 8, **caractérisé en ce que** l'étape de sélection d'au moins un spectre parmi les spectres mesurés et/ou un spectre de valeurs moyennes formé à partir des spectres mesurés, comprend l'une des sous-étapes suivantes ou les deux :
- appliquer le modèle de régression préliminaire aux spectres mesurés, afin d'obtenir respectivement une valeur de prévision pour la concentration du constituant dans l'échantillon respectif, étant entendu qu'on sélectionne le spectre mesuré ou les spectres mesurés pour lesquels la valeur de prévision est la plus proche de la valeur de mesure de référence de l'échantillon respectif ;
- sélectionner le spectre de valeurs moyennes.

10. Procédé selon l'une quelconque des revendications 1 à 9, **caractérisé en ce qu'**on sélectionne un à dix spectres parmi les spectres mesurés et/ou le spectre moyen formé à partir des spectres mesurés.

11. Procédé selon l'une quelconque des revendications 1 à 10, **caractérisé en ce qu'**au moins 100 simulations sont effectuées pour simuler les tolérances de composants des spectromètres à structure identique à l'aide du modèle mathématique des spectromètres à structure identique, de sorte qu'au moins 100 des spectres d'erreur (01) sont obtenus.

12. Procédé selon l'une quelconque des revendications 1 à 11, **caractérisé en ce que** le nombre de spectres simulés sélectionnés est compris entre 50 et 1000.

13. Procédé selon l'une quelconque des revendications 1 à 12, **caractérisé en ce qu'**il comprend en outre l'étape supplémentaire consistant à :
- utiliser le modèle de régression résultant dans les spectromètres à structure identique individuels, afin de déterminer à l'aide des spectromètres la concentration respective du constituant d'un échantillon à partir du spectre de l'échantillon mesuré à l'aide du spectromètre respectif.

14. Procédé selon l'une quelconque des revendications 1 à 12, **caractérisé en ce qu'**il comprend en outre l'étape supplémentaire consistant à :
- utiliser le modèle de régression résultant dans un réseau, lequel comprend les spectromètres à structure identique individuels et au moins une unité de calcul, l'au moins une unité de calcul étant utilisée pour déterminer les concentrations du constituant des échantillons à partir des spectres des échantillons mesurés à l'aide des spectromètres.
